# DEMANDE DE BREVET EUROPEEN

(11) **EP 1 199 373 A1**
(43) Date de publication de la demande: **24.04.2002**
(21) Numéro de dépôt: 00870232.6
(22) Date de dépôt: 17.10.2000
(51) Int. Cl.: C22B 7/02, C22B 1/244, C22B 1/245, C22B 19/30

(54) **Eléments agglomérés et procédé de traîtement de poussières métallurgiques**

(71) Demandeur: UNIVERSITE CATHOLIQUE DE LOUVAIN, 1348 Louvain la Neuve (BE)
(72) Inventeur: Van Lierde, André, 1180 Bruxelles (BE); Mévisse, Xavier, 1410 Waterloo (BE)
(74) Mandataire: De Vleeschauwer, Natalie

(57) **Abrégé**

Eléments agglomérés constitués d'un mélange comportant, en poids de matière sèche,
- 65 à 85% de poussières métallurgiques contenant des oxydes de fer, de zinc et de plomb, et du CaO et plus de 5% en poids de zinc,
- 0,3 à 3%, de préférence 0,6 à 1,2%, de ferromanganèse,
- 6 à 14% d'au moins un liant, et
- des fines de carbone en quantité telle que la teneur totale en carbone du mélange corresponde à de 70 à 200%, de préférence 90 à 120%, de la quantité nécessaire pour réduire les composés de fer, de zinc et de plomb contenus dans le mélange, lorsque le carbone est transformé en CO
- de la silice en quantité telle que le rapport pondéral SiO₂/CaO du mélange soit compris entre 0,5:1 et 2:1, de préférence entre 0,85:1 et 1,3:1.

## Description

La présente invention a pour objet des éléments agglomérés comprenant des poussières métallurgiques et un procédé de recyclage de ces poussières métallurgiques. Ce procédé peut être appliqué au traitement d'une grande variété de poussières produites par l'industrie sidérurgique, mais son intérêt économique est le plus marquant dans le cas de recyclage de poussières telles que les poussières de cubilot et les poussières d'aciérie électrique (souvent appelées EAF dust= electric arc furnace dust), c'est-à-dire de poussières de fusion métallurgique qui ont une teneur non négligeable en fer et en métaux non ferreux tels que le zinc et le plomb.

Il importe de noter que les termes "poussières métallurgiques" doivent être compris comme couvrant non seulement les "poussières" proprement dites telles qu'on les récolte par exemple dans les filtres à manches lors du dépoussiérage à sec des fumées de cubilot ou de four électrique, mais également les "boues" telles qu'on les obtient lors du dépoussiérage humide des fumées métallurgiques.

Ces poussières qui sont généralement considérées davantage comme des déchets que comme des produits secondaires, sont en fait des déchets dangereux et leur mise en décharge est par conséquent difficile et coûteuse.

Conformément à la législation de nombreux pays, ces poussières ne peuvent d'ailleurs plus être mises telles quelles en décharge car les produits toxiques qu'elles contiennent (Zn, Pb, Cd, Cr, Sn, etc.) peuvent s'en séparer partiellement par lessivage, pénétrer dans les terres et nappes aquifères et ainsi polluer les terres cultivées et l'eau de distribution.

Diverses techniques ont dès lors été proposées et utilisées pour éliminer ou valoriser ces poussières métallurgiques.

Des procédés ont été proposés pour transformer ces poussières en des briquettes ou granulés "stabilisés" dans lesquels les métaux lourds et autres produits toxiques se trouvent sous une forme telle qu'ils ne peuvent en substance plus en être séparés par lessivage à l'eau. Ces "déchets stabilisés" peuvent alors être déversés dans des décharges spéciales.

De tels procédés sont peu intéressants sur un plan économique car non seulement ils ne permettent pas de récupérer les métaux (et en particulier les métaux non ferreux tels que le zinc et le plomb) contenus dans les poussières, mais en outre ils entraînent des frais importants pour la "stabilisation" des poussières et pour le transport et la mise en décharge des produits stabilisés.

Il faut noter par ailleurs que suivant des législations plus strictes qui, dans de nombreux pays, devraient entrer en vigueur dans un assez proche avenir, seuls les déchets ultimes (non valorisables ou recyclables) pourront être déposés dans les décharges.

Pour le traitement des poussières métallurgiques, on a proposé et utilisé des procédés hydrométallurgiques. Certains des problèmes qu'entraînent de tels procédés sont causés par le fait que dans les poussières métallurgiques à traiter, une partie substantielle du zinc se trouve sous la forme d'"oxydes complexes" tels que ferrite de zinc, silicate de zinc, etc., dont il est très difficile de séparer économiquement le zinc par des procédés hydrométallurgiques. Pour cette raison et d'autres, le taux de récupération de zinc par ces procédés est généralement faible. Ces procédés hydrométallurgiques produisent en outre d'importantes quantités d'effluents toxiques dont on peut difficilement se débarrasser (même après traitement préalable) sans que cela n'entraîne un sérieux risque de pollution de l'environnement.

On connaît également des procédés pyrométallurgiques de traitement de poussières métallurgiques, qui visent la récupération de métaux non ferreux (en particulier le zinc, mais également le cadmium et le plomb) sans valorisation du fer, par réduction à des températures de 1100°-1200°C (ou 1400°C dans le "procédé HTR"), c'est-à-dire sans fusion de la matière ferrugineuse. Dans cette catégorie de procédés on trouve notamment le "procédé Waelz" (suivant lequel on opère à 1100°-1200°C) et le "procédé HTR" (qui peut être considéré comme un procédé Waelz modifié, mais suivant lequel on opère à environ 1400°C). Outre des poussières secondaires (contenant de l'oxyde de zinc impur et de plus faibles quantités d'autres métaux comme le cadmium et le plomb), ces procédés produisent des scories riches en fer qui sont soit mises en décharge, soit utilisées comme matériau pour la construction de routes.

Pour le traitement de poussières métallurgiques, on connaît également des procédés pyrométallurgiques suivant lesquels on récupère non seulement des métaux non ferreux (sous la forme de poussières plus ou moins enrichies en Zn, Pb, Cd, etc.) mais également le fer contenu dans les poussières initiales (sous forme de fontes dont la qualité est souvent assez médiocre).

Pour certains de ces procédés, on utilise des installations de technologie souvent très complexe tels que four à lit fluidisé, four rotatif, four à induction ou autres fours électriques spécialement conçus ou adaptés. Pour plusieurs raisons, en particulier économiques, ces procédés sont inapplicables dans de nombreux cas.

Pour certains de ces procédés, on utilise cependant des installations comparativement plus simples et plus courantes et, en particulier, des cubilots à vent chaud. Il importe de noter d'emblée qu'en règle générale, ces procédés sont utilisés pour recycler les poussières produites par le cubilot lui-même, de manière à diminuer la quantité de ces poussières (par tonne de fonte produite) et à augmenter leur teneur en métaux non ferreux (en particulier en zinc) jusqu'à atteindre ou dépasser la teneur minimale exigée par les affineurs de zinc.

Les procédés de recyclage de poussières dans un cubilot se répartissent essentiellement en deux groupes, suivant qu'on procède à la réinjection des poussières par les tuyères ou au réenfournement par le gueulard (voir à ce sujet "Fonderie-Fondeur d'Aujourd'hui" 175 - Mai 1998, p. 18-41).

Parmi les procédés du premier de ces groupes, on a principalement proposé les suivants :
- Procédé NPT (Negative pressure tuyere) dans lequel on provoque l'aspiration des poussières aux tuyères, grâce à une dépression créée par un venturi situé dans celles-ci;
- Procédé par injection en pression positive. Ce procédé qui est utilisé depuis longtemps pour injecter divers produits métallurgiques par les tuyères du cubilot a été utilisé par plusieurs fonderies pour réinjecter de cette manière des poussières produites par le cubilot;
- Procédé par injection aux tuyères par brûleur oxycombustible. Suivant ce procédé, on fournit la chaleur de scorification de la poussière en même temps que celle-ci est injectée par les tuyères, grâce à des brûleurs situés sur les tuyères. Ce procédé permet notamment de remplacer une partie du coke par du gaz naturel.

Il est connu que les procédés de ce groupe présentent certains inconvénients, notamment :
- augmentation de la teneur en métaux non ferreux (zinc et plomb) dans la fonte produite;
- colmatage et/ou abrasion des dispositifs d'injection;
- extinction de la flamme en chambre de post-combustion ou autre perturbation de la marche du cubilot lorsque le taux d'injection de poussière recyclée dépasse un certain seuil, entraînant une teneur trop élevée en Zn dans les poussières produites;
- surconsommation de coke (pour le procédé avec injection en pression positive);
- surconsommation de ferrosilicium.

Il a également été proposé de recycler des poussières de cubilot par réenfoumement par le gueulard. Suivant ce procédé proposé, des poussières de cubilot sont mélangées avec du ferrosilicium, de la mélasse, de la chaux et de l'eau et le mélange ainsi formé est transformé en éléments agglomérés (boulets) qui sont ensuite réenfoumés par le gueulard du cubilot. En recyclant ainsi une partie des poussières récoltées dans le filtre du cubilot, on réduit de manière sensible, par tonne de fonte produite, la quantité de poussières quittant l'installation (pour être livrée à un récupérateur de zinc) et on augmente la teneur en métaux lourds de ces poussières. Dans le cas d'un recyclage de près de la moitié des poussières, la teneur en zinc des poussières quittant l'installation peut ainsi passer à près de 15 %, par rapport à une teneur en zinc d'environ 7,5 % lorsque les poussières ne sont pas recyclées.

L'intérêt d'un tel procédé réside notamment dans le fait qu'il permet de réduire de manière sensible la quantité de poussières quittant l'installation, mais la teneur en zinc de ces poussières reste toutefois assez basse. De plus, il est fait usage d'importantes quantités de ferrosilicium dans ce procédé, dont l'application est par ailleurs limitée par des problèmes d'extinction de flamme en chambre de combustion (au-delà d'un recyclage de 8 à 10 kg de poussières par tonne de fonte).

Le but de la présente invention est de procurer des éléments agglomérés autofusibles et autoréductibles, généralement obtenus à partir de poussières d'aciéries électriques, qui puissent être utilisés pour la récupération, d'une part, d'une fonte de qualité commerciale et, d'autre part, de poussières à haute teneur en zinc susceptibles d'être valorisées. L'invention propose donc également un procédé de traitement de ces éléments agglomérés permettant de traiter des poussières métallurgiques contenant notamment du fer et du zinc de manière à produire, à coût modéré, des poussières métallurgiques ayant une teneur en zinc nettement plus élevée et de la fonte de qualité commerciale.

L'invention a également pour but de fournir un tel procédé qui peut notamment être exécuté dans un cubilot standard.

L'invention a plus particulièrement pour but de fournir un tel procédé permettant d'obtenir des poussières métallurgiques ayant une teneur en zinc de près de 50 %, ou même supérieure à 50 %, en traitant des poussières métallurgiques ayant une teneur en zinc déjà relativement élevée (comprise par exemple entre 15 et 20 %) telles que certaines poussières d'aciérie électrique.

La présente invention a ainsi notamment pour objet un procédé pour traiter des poussières métallurgiques contenant des oxydes de fer, de zinc, de plomb et éventuellement d'autres métaux non ferreux, procédé suivant lequel,
- on forme un mélange comportant lesdites poussières, des fines de carbone et au moins un liant et on transforme ce mélange en éléments agglomérés,
- on enfoume ces éléments agglomérés dans un four métallurgique dans lequel on charge également du coke, en sorte que les oxydes de fer, de zinc et de plomb soient réduits à l'état métallique et que le plomb et le zinc résultants soient volatilisés, le fer fondu et des scories descendant vers le fond du four métallurgique, le zinc et le plomb volatilisés étant réoxydés dans la partie supérieure du four et entraînés par la fumée de ce four,
- on prélève le fer fondu et les scories fondues à la partie inférieure du four métallurgique,
- on dépoussière les fumées du four et on récupère les poussières.

L'invention concerne notamment un procédé pour traiter des poussières métallurgiques contenant des oxydes de fer, de zinc, de plomb et éventuellement d'autres métaux non ferreux, procédé suivant lequel :
- on enfourne dans un four métallurgique des éléments agglomérés autofusibles et autoréductibles comportant de 65 à 85%, en poids de matière sèche, desdites poussières métallurgiques, dans des conditions telles que le zinc et le plomb sont volatilisés, puis réoxydés dans la partie supérieure du four métallurgique, et entraînés par la fumée de ce four, avant que le fer ne fonde et ne rejoigne, avec les scories, le fond du four métallurgique,
- on prélève le fer fondu et les scories à la partie inférieure du four métallurgique,
- on dépoussière les fumées du four et on récupère la poussière enrichie à plus de 45% en zinc.

Les éléments agglomérés selon l'invention sont formés d'un mélange comportant :
- de la poussière métallurgique contenant des oxydes de fer, de zinc et de plomb : 65 à 85 % en poids par rapport au poids de la matière sèche du mélange,
- des fines de carbone: en quantité telle que la teneur totale en carbone du mélange corresponde à 70 à 200 % et de préférence à 90 à 120 % de la quantité nécessaire pour former, par réduction des composés de fer, de zinc et de plomb contenus dans le mélange, les métaux correspondants, lorsque le carbone est transformé en CO,
- au moins un liant ayant une teneur en soufre inférieure à 2 % en poids : 6 à 14 % en poids de matière sèche, par rapport au poids de matière sèche du mélange,
- de la chaux éteinte : 3 à 6 % en poids par rapport au poids de matière sèche du mélange,
- de la silice : en quantité telle que le rapport pondéral SiO₂/CaO du mélange soit compris entre 0,5/1 et 2/1 et de préférence entre 0,85/1 et 1,3/1, et
- du ferromanganèse : 0,3 à 3 % et de préférence 0,6 à 1,2 % en poids, par rapport au poids de matière sèche du mélange.

Les poussières métallurgiques incorporées dans les éléments agglomérés peuvent être d'origine diverse et on peut éventuellement incorporer dans ces agglomérés un mélange de poussières métallurgiques d'origines différentes.

Suivant une forme particulière du procédé, ces poussières métallurgiques consistent en totalité ou en partie de poussières d'aciérie électrique.

Il est avantageux que les poussières métallurgiques incorporées dans les éléments agglomérés contiennent généralement de 5 à 40 % en poids de zinc, habituellement de 10 à 40 % en poids de zinc, et de préférence de 15 à 30 % en poids de zinc.

Habituellement les poussières métallurgiques contiennent les éléments chimiques suivants : Fe, Pb, Zn, MnO, S, C, SiO₂, CaO, MgO et Cl; et de préférence Fe, Zn, Pb, MnO et CaO. De bons résultats ont été obtenus avec une poussière métallurgique contenant au moins du zinc, du fer et du plomb et également des éléments de gangue tels que CaO, SiO₂, Al₂O₃, K₂O et Na₂O.

La granulométrie des fines de carbone incorporées dans les éléments agglomérés est avantageusement inférieure à 3 mm, et de préférence inférieure à 1,5 mm.

Les fines de carbone incorporées dans les éléments agglomérés peuvent être de type différents et on peut éventuellement faire usage de mélanges de deux ou plusieurs types de fines de carbone différentes.

C'est ainsi que ces fines de carbone peuvent notamment comprendre du coke de pétrole, du coke de brai, du charbon de bois, du coke de houille ou des mélanges de ces matières.

La réactivité, la granulométrie et la quantité de fines de carbone mises en oeuvre doivent de préférence être telles qu'à 1200°C, au moins 90 %, mais de préférence 95 % du zinc et du plomb sont volatilisés et au moins 95 % du fer présent dans les oxydes de fer sont réduits à l'état de métal.

Il est en tout cas avantageux que la teneur en soufre des fines de carbone utilisées soit la plus faible possible pour limiter la teneur en soufre de la fonte produite, et que la teneur en carbone de ces fines de carbone soit la plus élevée possible pour limiter la présence d'eau et de cendres.

Il importe que les éléments agglomérés puissent être enfournés dans un four métallurgique (par exemple, enfournés par le gueulard d'un cubilot) sans être substantiellement désagrégés. Il faut, en effet, que ces éléments agglomérés ne soient pas finement fragmentés par suite des chocs qu'ils subissent lors de cet enfournement et que peu ou pas d'éléments ne se brisent.

Il est en outre avantageux que le liant incorporé dans le mélange soit pauvre en soufre, de manière à limiter la teneur en soufre de la fonte produite.

Habituellement le liant comprend de la mélasse de sucrerie et, éventuellement, de la chaux éteinte.

De très bons résultats sont obtenus grâce à l'utilisation combinée de mélasse de sucrerie et de Ca(OH)₂.

Le mélange comprend avantageusement de 9 à 13 % en poids, et de préférence de 10 à 12 % en poids (exprimé en matière sèche) de mélasse de sucrerie (telle que la mélasse de canne à sucre), par rapport au poids de matière sèche du mélange.

Le mélange comprend 3 à 6 % en poids et de préférence de 4 à 5 % en poids de chaux éteinte, par rapport au poids de matière sèche du mélange.

La silice incorporée dans le mélange comprend de préférence du sable siliceux.

Habituellement le rapport pondéral SiO₂/CaO du mélange est compris entre 0,5:1 et 2:1 et de préférence entre 0,85:1 et 1,3:1. Ce rapport pondéral SiO₂/CaO concerne le mélange total (et pas seulement le Ca(OH)₂ et le sable siliceux incorporés dans le mélange).

Pour déterminer le rapport pondéral SiO₂/CaO du mélange il faut donc tenir compte du fait que des ingrédients autres que la chaux éteinte et le sable siliceux contiennent de la silice et du calcium (notamment les poussières métallurgiques, les fines de carbone et le ferromanganèse).

Le mélange contient de 0,6 à 1,2 % en poids et de préférence de 0,8 à 1 % en poids de ferromanganèse. Habituellement le ferromanganèse contient les éléments chimiques suivants : Fe, Mn, Si, S, C, Cr, Cu, Pb et Zn; et de préférence Fe et Mn. Ce ferromanganèse contient de préférence de 74 à 79 % de Mn et a une granulométrie comprise entre 0 et 5 mm et de préférence entre 0 et 3 mm.

Le volume des éléments agglomérés est avantageusement compris entre 30 et 130 cm³ et de préférence entre 50 et 90 cm³. Les éléments agglomérés peuvent se présenter sous des formes diverses. C'est ainsi que lors de la mise au point de l'invention on a notamment mis en oeuvre des éléments agglomérés cylindriques d'un diamètre de 5 cm et d'une hauteur d'environ 3 cm, obtenus au moyen d'une presse à piston. Les éléments agglomérés de l'invention se présentent sous la forme de pellets, de briquettes, de cylindres ou de boulets ayant chacun un volume compris entre 30 et 130 cm³, et de préférence entre 50 et 90 cm³.

Il s'est toutefois avéré plus pratique et avantageux de fabriquer les éléments agglomérés au moyen d'une presse à roues tangentielles, ce qui permet de former des éléments agglomérés sous forme de boulets. Les presses à roues tangentielles qui sont notamment utilisées pour la fabrication de boulets agglomérés au départ de fines de carbone, comprennent deux roues tangentielles munies de cavités en forme de demi-éllipsoïdes. La matière à agglomérer est introduite entre ces deux roues qui tournent en sens inverse, ce qui permet de produire des boulets compacts. De préférence, les éléments agglomérés de l'invention se présentent sous la forme de briquettes trouées ou évidées.

Des essais ont montré que le volume de ces boulets est de préférence compris entre 60 et 80 cm³, par exemple 70 cm³ environ.

Lorsque le procédé est, par exemple, exécuté dans un four métallurgique particulier, dit cubilot, le temps de séjour de la matière dans le cubilot est relativement court : environ 60 à 90 minutes. Pour que la volatilisation du zinc et du plomb atteigne 95 % à 1200°C, il faut que le coeur du boulet aussi bien que sa surface atteignent cette température en un temps compatible avec le temps mis par le boulet pour atteindre la zone de 1200°C, dans le cubilot, soit environ 30 à 40 minutes. Par ailleurs, les boulets ne peuvent pas être trop petits de manière à ne pas perturber la perméabilité de la charge au gaz.

Des essais ont montré que des boulets de 70 cm³ environ (plus petite dimension : environ 4,5 cm; plus grande dimension : environ 6 cm) placés dans une enceinte à 1200°C étaient portés en 30 minutes environ, de manière homogène, à cette température, alors qu'avec des boulets de 175 cm³ environ (de forme analogue), le temps nécessaire pour atteindre la température de 1200°C au centre des boulets, était voisin de 65 minutes, ce qui est trop long vu la marche du four. Avec de tels boulets de 175 cm³, après 30 minutes de temps de séjour, le centre des boulets a une température voisine de 950-1000°C. Ceci a évidemment une implication très nette sur la volatilisation du zinc et du plomb, comme le montre le tableau suivant :

| Teneurs résiduelles en Zn et Pb en fonction de la température du centre des boulets lorsque les boulets sont mis dans un four à 1200°C : | | | |
|---|---|---|---|
| | Boulets de 70 cm³ | Boulets de 175 cm³ | |
| | Température du centre : 1200°C après 25 min. | Température du centre : 1200°C après 65 min. | Température du centre : 950-1000°C après 25-30 min. |
| Teneur Zn (%): | 0,5-0,7 | 0,4-0,7 | 10-12 |
| Teneur Pb (%): | 0,1-0,6 | 0,09 | ± 1 |

Le procédé suivant l'invention peut être exécuté dans divers fours métallurgiques tels que le four cubilot et notamment un cubilot à vent froid. C'est ainsi, par exemple, que des poussières de four électriques peuvent être traitées (sous forme d'éléments agglomérés suivant l'invention) dans le four électrique lui-même.

Par ailleurs, on peut effectuer le procédé en chargeant dans le four des mitrailles, en plus des éléments agglomérés et du coke.

On peut faire varier en de larges proportions le rapport entre les charges pondérales d'éléments agglomérés et les charges pondérales de mitrailles enfournées.

Ce rapport peut être choisi en tenant compte de plusieurs facteurs, et notamment de la teneur en zinc des poussières métallurgiques à traiter, de la teneur en zinc que l'on souhaite atteindre dans les poussières produites par le procédé, de la qualité de la fonte qu'on souhaite produire, du type de four métallurgique utilisé, etc.

Dans beaucoup de cas, il s'avère avantageux de charger dans le four métallurgique de 20 à 40 % en poids, et de préférence de 25 à 35 % en poids d'éléments agglomérés suivant l'invention, par rapport au poids des mitrailles chargées dans le four.

Dans le cas où le procédé est exécuté dans un cubilot, cela permet de produire de la fonte de bonne qualité, tout en atteignant ou dépassant une teneur en zinc de 50 % dans les poussières produites, en partant de poussières contenant, par exemple, entre 15 et 20 % de zinc.

La présente invention a également pour objet des éléments agglomérés tels que définis ci-dessus, c'est-à-dire les éléments agglomérés qui sont utilisés dans le procédé suivant l'invention.

La présente invention concerne également des éléments agglomérés constitués d'un mélange comportant, en poids de matière sèche,
- 65 à 85% de poussières métallurgiques contenant des oxydes de fer, de zinc et de plomb, et du CaO et contenant plus de 5% en poids de zinc,
- 0,3 à 3%, de préférence 0,6 à 1,2%, de ferromanganèse,
- 6 à 14% d'au moins un liant, et
- des fines de carbone en quantité telle que la teneur totale en carbone du mélange corresponde à de 70 à 200%, de préférence 90 à 120%, de la quantité nécessaire pour réduire les composés de fer, de zinc et de plomb contenus dans le mélange, lorsque le carbone est transformé en CO
- de la silice en quantité telle que le rapport pondéral SiO₂/CaO du mélange soit compris entre 0,5:1 et 2:1, de préférence entre 0,85:1 et 1,3:1.

La présente invention concerne également un cubilot, four métallurgique adapté pour la réalisation du procédé tel que décrit ci-dessus, comprenant des moyens d'extraction par filtre à manches dans le circuit de gaz de poussières riches en zinc.

L'invention concerne notamment un four métallurgique, tel qu'en particulier un cubilot, adapté à la réalisation du procédé décrit ci-dessus. Ce cubilot comprend une installation de récupération des poussières du circuit de gaz par filtre à manches. Le principal avantage de ce four cubilot réside dans sa capacité supérieure à celle utilisée classiquement lorsqu'on ne recycle pas de tels éléments agglomérés, vu l'accroissement du volume de poussières.

D'autres particularités et avantages du procédé suivant l'invention ressortiront des deux exemples d'exécution qui suivent.

### Exemple 1

### A. Fabrications d'éléments agglomérés

Des éléments agglomérés (boulets) sont fabriqués avec un mélange contenant les ingrédients suivants :

### 1° Poussières métallurgiques :

Poussières de four à arc électrique présentant les caractéristiques chimiques suivantes :

| % sur sec | | | | | | | | | | H₂O % |
|---|---|---|---|---|---|---|---|---|---|---|
| Fe | Pb | Zn | MnO | S | C | SiO₂ | CaO | MgO | Cl | |
| 40,99 | 1,22 | 18,63 | 4,20 | 0,51 | 0,56 | 2,69 | 4,09 | 1,52 | 0,69 | 0,05 |

### 2° Fines de carbone :

Fines de coke de brai (granulométrie <3 mm) présentant les caractéristiques suivantes :

| C (%) | S (%) | Mat. vol. (%) | Cendres (%) | H₂O (%) |
|---|---|---|---|---|
| 94 | 0,25 | 2 | 0,7 | 0,7 |

### 3° Liant :

| Mélasse de sucre de canne : | |
|---|---|
| Teneur en matière sèche | 80 % |
| Teneur en S | 0,5 % |

### 4° Chaux éteinte :

Chaux éteinte en poudre

### 5° Silice :

Sable fin : granulométrie <2 mm.

### 6° Ferromanganèse :

Ferromanganèse ayant une granulométrie de 0-3 mm et les caractéristiques suivantes :

| Fe (%) | Mn (%) | Si (%) | S (%) | C (%) | Cr (ppm) | Cu (ppm) | Pb (ppm) | Zn (ppm) |
|---|---|---|---|---|---|---|---|---|
| 13,68 | 75,65 | 1,67 | 0,02 | 6,3 | 100 | 420 | 29 | 48 |

Avec ces ingrédients on forme un mélange de composition suivante :

| | |
|---|---|
| Poussières métallurgiques | 70,15 |
| Coke de brai | 9,00 |
| Mélasse | 11,85 |
| Chaux | 4,50 |
| Sable | 3,60 |
| Ferromanganèse | 0,90 |

Les quantités indiquées sont des pourcentages en poids de matière sèche.

On incorpore en outre dans le mélange de 2 à 3 % d'eau, pour rendre ce mélange plus plastique.

Ce mélange dans lequel les ingrédients sont uniformément répartis est ensuite transformé en boulets au moyen d'une presse à roues tangentielles.

Le volume de ces boulets est d'environ 70 cm³.

La résistance mécanique des boulets, qui est déjà bonne dès leur sortie de presse, est encore améliorée après un ou deux jours de stockage.

### B. Cubilot :

Le traitement des éléments agglomérés décrits ci-dessus est effectué dans un cubilot à vent froid équipé de trois tuyères refroidies à l'eau. Le cubilot a un diamètre d'environ 90 cm. Le débit de vent (pouvant être enrichi en oxygène) est de 50 à 70 m³/min et le débit de fonte est de l'ordre de 5 t/h.

Lorsque le cubilot n'est pas alimenté en éléments agglomérés, il est alimenté comme suit :
a) charge métallique:
   fonte (mitraille de fonte, retours de fonderie) : environ 85 %
   aciers (constitués environ pour la moitié de mitrailles de tôles galvanisées) : environ 15 %
b) coke (pour la fusion),
   (par rapport aux charges métalliques) : 11 à 15 %
c) castine (en % de la charge de coke) : environ 30 %
d) ferro-alliages: ferro-silicium, ferro-manganèse, ferro-phosphore, etc. : en quantité variable pour obtenir une fonte de composition désirée.

La fonte produite est une fonte grise lamellaire donnant approximativement l'analyse suivante :

| C (%) | Si (%) | Mn (%) | P (%) | S (%) |
|---|---|---|---|---|
| 3 | 1,5 | 0,5 | 1 | <0,15 |

### C. Traitement des éléments agglomérés dans le cubilot

Les éléments agglomérés fabriqués comme décrit au point A ci-dessus sont traités dans le cubilot décrit au point B ci-dessus.

Cette opération est conduite comme suit :
1° Pendant les six premières heures (Heure 0 à Heure 6) de fonctionnement du cubilot, celui-ci est alimenté comme indiqué au point B, c'est-à-dire qu'on n'y charge pas d'éléments agglomérés. Les fumées extraites du cubilot sont filtrées par un système de cyclone (grosses particules) et de filtre à manches (fines particules). L'analyse des poussières prélevées est en moyenne comme suit :

| Résultats (%) | Zn | Pb | Si | Ca | Al | Fe | Mn | C | S |
|---|---|---|---|---|---|---|---|---|---|
| Grosses | 1,11 | 0,27 | 15,4 | 5,6 | 1,26 | 16,07 | 2,1 | 18,3 | 0,72 |
| Fines | 1,81 | 1,13 | 17,8 | 3,1 | 0,69 | 9,95 | 7,4 | 5,39 | 1,73 |

2° Depuis l'Heure 6 jusqu'à l'Heure 12 plus 5 minutes, on continue à charger le cubilot mais en remplaçant 38 % de la charge de mitrailles par des éléments agglomérés (boulets).
Pendant ce temps, les boulets, les mitrailles et le coke sont introduits dans les proportions suivantes :

| Tonnage de boulets introduits : | Tonnage de mitrailles introduites : | Tonnage de coke introduit : |
|---|---|---|
| 9,5 t | 24,6 t | 5,5 t |

Il est à noter que, pendant cette période de fonctionnement du cubilot, la quantité de coke introduit correspondant à environ 16 % en poids par rapport au poids total des boulets et des mitrailles.
3° Depuis l'Heure 12 plus 15 minutes jusqu'à l'Heure 18, le cubilot est alimenté comme indiqué au point B, c'est-à-dire qu'on n'y charge plus d'éléments agglomérés.

### D. Bilan du zinc

Depuis l'Heure 6 jusqu'à l'Heure 18, on détermine, pour chaque heure, la quantité (en kg) de zinc introduit et la quantité (en kg) de zinc extrait (poussières).

Il est à noter que pour la quantité de zinc introduit, il n'est tenu compte que de la quantité de zinc introduit par les boulets.

On détermine aussi d'heure en heure la quantité de poussières récoltées et la teneur en zinc de ces poussières. De la quantité de zinc réellement extrait qui peut ainsi être calculée, on déduit la petite quantité de zinc extrait dont l'origine peut être attribuée aux mitrailles introduites dans le cubilot, de manière à n'inscrire au bilan que la quantité de zinc dont l'origine peut être attribuée à l'introduction de boulets.

Le bilan du zinc ainsi établi est comme suit :

| Heures | Zn introduit (kg) | Zn extrait (kg) | Zn introduit "cumulé" (kg) | Zn extrait "cumulé" (kg) | Zn retardé (kg) |
|---|---|---|---|---|---|
| 6-7 | 177,8 | 0 | 177,8 | 0 | 177,8 |
| 7-8 | 197,4 | 3,2 | 375,2 | 3,2 | 372 |
| 8-9 | 204,5 | 47,1 | 579,7 | 50,3 | 529,4 |
| 9-10 | 215,8 | 83,6 | 795,5 | 133,9 | 661,6 |
| 10-11 | 201,7 | 79 | 997,2 | 212,9 | 784,3 |
| 11-12 | 198,6 | 175,4 | 1195,8 | 388,3 | 807,5 |
| 12-13 | 45,8 | 119 | 1241,6 | 507,3 | 734,3 |
| 13-14 | 0 | 313,8 | 1241,6 | 821 | 420,6 |
| 14-15 | 0 | 174,2 | 1241,6 | 995,3 | 246,3 |
| 15-16 | 0 | 157 | 1241,6 | 1152,3 | 89,3 |
| 16-18 | 0 | 91,4 | 1241,6 | 1243,7 | 0 |

Remarque : Pour les deux heures entre l'Heure 16 et l'Heure 18, les quantités de "Zn extrait" ont été additionnées dans le bilan.

Les observations et analyses effectuées lors de cet exemple d'exploitation du procédé suivant l'invention permettent notamment de faire les constatations suivantes :
- L'extraction de zinc (oxydé) par les poussières de fumées recueillies subit un retard important par rapport à l'introduction des boulets dans le cubilot. Ce retard est attribué à son phénomène de volatilisation/recondensation à l'intérieur du four. En effet, le zinc métallique qui se forme par réduction des oxydes de zinc (principalement entre 1000° et 1200°C) se volatilise et monte vers les étages supérieurs du cubilot où il se réoxyde en donnant du ZnO dont une partie plus ou moins importante redescend avec la charge du four. Cet oxyde de zinc va à nouveau être réduit et volatilisé lors de sa descente dans le cubilot. Au moins une partie du zinc contenu dans le cubilot subit ainsi un phénomène qu'on pourrait appeler "cycle du zinc" caractérisé par des réductions et oxydations successives. Une partie du zinc contenu dans le cubilot toume ainsi "en boucle". Ce n'est qu'après plusieurs heures qu'un équilibre est atteint et qu'en substance tout le zinc introduit dans le cubilot par les boulets se retrouve dans les poussières extraites.
- C'est à cause de ce "cycle du zinc" que les poussières produites plusieurs heures après que l'on a cessé de charger des boulets dans le cubilot, contiennent encore des quantités assez importantes de zinc.
   Dans le "bilan du zinc" donné plus haut, on constate même que la quantité de "zinc extrait" a atteint son maximum au cours de l'heure qui suit l'Heure 13, alors qu'à ce moment le cubilot n'est plus alimenté en boulets.
- Ce "cycle du zinc" entraîne une consommation accrue de carbone. C'est pour cette raison que pendant la période où des boulets sont alimentés dans le cubilot, on charge dans celui-ci 16 % de coke par rapport au poids total des boulets et des mitrailles chargées.
   L'oxygène nécessaire à la combustion du supplément de coke chargé est avantageusement introduit essentiellement par une suroxygénation de l'air injecté par les tuyères du cubilot.
- Les boulets peuvent être chargés dans le cubilot aussi bien au moyen de l'électro-aimant (au moyen duquel on charge les mitrailles) que par la trémie (par laquelle on charge notamment le coke).
- les fontes produites pendant les périodes où des boulets sont chargés dans le cubilot présentent des caractéristiques physiques inchangées, notamment en ce qui concerne leur résistance au choc qui n'est pas modifiée. Leur analyse chimique est restée quasiment inchangée. En particulier, les teneurs en S, Pb et Zn sont nettement inférieures aux normes imposées.

### Exemple 2

### A. Fabrication d'éléments agglomérés

Les éléments agglomérés (boulets) sont fabriqués comme décrit dans l'exemple 1 et leur composition est identique.

### B. Cubilot

Le cubilot utilisé est le même que celui utilisé pour l'exemple 1.

### C. Traitement des éléments agglomérés dans le cubilot

Les éléments agglomérés (boulets) fabriqués comme décrit au point A de l'exemple 1, sont traités dans le cubilot décrit au point B de l'exemple 1.

Cette opération est conduite comme suit :
1° Pendant les six premières heures (Heure 0 à Heure 6) de fonctionnement du cubilot, celui-ci est alimenté comme indiqué au point B de l'exemple 1, c'est-à-dire qu'on n'y charge pas d'éléments agglomérés.
Les fumées extraites du cubilot sont filtrées par un système de cyclone (grosses particules) et de filtre à manches (fines particules). L'analyse des poussières prélevées est reprise au point C de l'exemple 1.
2° Depuis l'Heure 6 jusqu'à l'Heure 13, on continue à charger le cubilot mais en remplaçant 42,9 % de la charge de mitrailles par des éléments agglomérés.
Pendant ce temps, les boulets, les mitrailles et le coke sont introduits dans les proportions suivantes :

| Tonnage de boulets introduits : | Tonnage de mitrailles introduites : | Tonnage de coke introduit : |
|---|---|---|
| 10,8 t | 25,2 t | 5,7 t |

Il est à noter que, pendant cette période de fonctionnement du cubilot, la quantité de coke introduit correspondant à environ 15,8 % en poids par rapport au poids total des boulets et des mitrailles.
3° Depuis l'Heure 13 jusqu'à l'Heure 18, le cubilot est alimenté comme indiqué au point B de l'exemple 1, c'est-à-dire qu'on n'y charge plus d'éléments agglomérés.

### D. Analyses chimiques de la fonte et des poussières produites

Depuis l'Heure 8 jusqu'à l'Heure 18, on prélève des échantillons de la fonte produite et des poussières récoltées.

L'analyse chimique de la fonte produite pendant cette période est en moyenne comme suit :

| Fe (%) | C (%) | Mn (%) | S (%) | Si (%) | Cu (%) | Cr (%) | Zn (ppm) | Pb (ppm) |
|---|---|---|---|---|---|---|---|---|
| 93,5 | 2,97 | 0,42 | 0,06 | 1,38 | 0,16 | 0,1 | 48 | <10 |

Le tableau suivant indique l'analyse chimique des poussières fines (recueillies par le filtre à manches) produites pendant cette période.

| Heures | Teneur Zn (%) | Teneur Pb (%) | Teneur Fe (%) | Teneur Si (%) | Teneur C (%) |
|---|---|---|---|---|---|
| 8-9 | 28,8 | 6,5 | 9,7 | 6,4 | 7,5 |
| 9-10 | 37,7 | 6,1 | 7,6 | 4,5 | 5,1 |
| 10-11 | 46,5 | 5,7 | 5,6 | 2,9 | 3,8 |
| 11-12 | 50,5 | 4,7 | 4,9 | 2,6 | 3,2 |
| 12-13 | 54 | 4,7 | 4,1 | 2 | 2,9 |
| 13-14 | 56,8 | 5,2 | 3,2 | 1,4 | 1,6 |
| 14-15 | 51,5 | 5,4 | 4 | 2,9 | 1,5 |
| 15-16 | 50,6 | 5,4 | 4,2 | 3,1 | 1,7 |
| 16-18 | 40,8 | 4,7 | 7,3 | 4,4 | 4,7 |

On notera que la teneur en zinc des poussières fines recueillies entre l'Heure 10 et l'Heure 16 est en moyenne supérieure à 50 %. De telles poussières peuvent être vendues pour être valorisées par un affineur de zinc.

Les poussières de granulométrie plus grossière, récoltées au cyclone, sont nettement plus pauvres en zinc et plomb que les fines, et par contre nettement plus riches en fer, carbone et chaux. Elles peuvent être recyclées avantageusement à l'étape d'agglomération (fabrication des boulets) comme source de fer, carbone et chaux (mais également de zinc et de plomb).

## Revendications

1. Eléments agglomérés constitués d'un mélange comportant, en poids de matière sèche,
- 65 à 85% de poussières métallurgiques contenant des oxydes de fer, de zinc et de plomb, et du CaO et plus de 5% en poids de zinc,
- 0,3 à 3%, de préférence 0,6 à 1,2%, de ferromanganèse,
- 6 à 14% d'au moins un liant, et
- des fines de carbone en quantité telle que la teneur totale en carbone du mélange corresponde à de 70 à 200%, de préférence 90 à 120%, de la quantité nécessaire pour réduire les composés de fer, de zinc et de plomb contenus dans le mélange, lorsque le carbone est transformé en CO
- de la silice en quantité telle que le rapport pondéral SiO₂/CaO du mélange soit compris entre 0,5:1 et 2:1, de préférence entre 0,85:1 et 1,3:1.

2. Eléments agglomérés selon la revendication 1, **caractérisés en ce que** la poussière métallurgique comprend de 10 à 40%, de préférence de 15 à 30%, en poids de zinc.

3. Eléments agglomérés selon n'importe laquelle des revendications précédentes, **caractérisés en ce que** la poussière métallurgique est une poussière d'aciérie électrique.

4. Eléments agglomérés selon n'importe laquelle des revendications précédentes, dans lesquels le liant présente une teneur en soufre inférieure à 2%.

5. Eléments agglomérés selon n'importe laquelle des revendications précédentes, dans lesquels le liant comprend de la mélasse de sucrerie et, éventuellement, de la chaux éteinte.

6. Eléments agglomérés selon n'importe laquelle des revendications précédentes, **caractérisés en ce que** les fines de carbone contenues dans le mélange ont une granulométrie inférieure à 3 mm.

7. Eléments agglomérés selon n'importe laquelle des revendications précédentes, **caractérisés en ce que** les fines de carbone contenues dans le mélange sont choisies parmi le groupe constitué par le coke de pétrole, le coke de brai, le charbon de bois et le coke de houille.

8. Eléments agglomérés selon n'importe laquelle des revendications précédentes comportant de 0,8 à 1% en poids de ferromanganèse, par rapport au poids de matière sèche, ledit ferromanganèse ayant de préférence une granulométrie inférieure à 3 mm.

9. Eléments agglomérés selon n'importe laquelle des revendications précédentes, **caractérisés en ce qu'**ils se présentent sous la forme de pellets, de briquettes, de cylindres ou de boulets ayant chacun un volume compris entre 30 et 130 cm³, de préférence entre 50 et 90 cm³.

10. Eléments agglomérés selon n'importe laquelle des revendications 1 à 8, **caractérisés en ce qu'**ils se présentent sous la forme de briquettes trouées ou évidées.

11. Procédé pour traiter des poussières métallurgiques contenant des oxydes de fer, de zinc, de plomb et éventuellement d'autres métaux non ferreux, procédé suivant lequel :
- on enfourne dans un four métallurgique des éléments agglomérés autofusibles et autoréductibles comportant de 65 à 85%, en poids de matière sèche, desdites poussières métallurgiques, dans des conditions telles que le zinc et le plomb sont volatilisés, puis réoxydés dans la partie supérieure du four métallurgique, et entraînés par la fumée de ce four, avant que le fer ne fonde et ne rejoigne, avec les scories, le fond du four métallurgique,
- on prélève le fer fondu et les scories à la partie inférieure du four métallurgique,
- on dépoussière les fumées du four et on récupère la poussière enrichie à plus de 45% en zinc.

12. Procédé suivant l'une quelconque des revendications précédentes, **caractérisé en ce que** les éléments agglomérés sont des éléments agglomérés selon n'importe laquelle des revendications 1 à 10.

13. Procédé suivant l'une des revendications précédentes, **caractérisé en ce que** le four métallurgique est un cubilot à vent froid.

14. Procédé suivant la revendication précédente, **caractérisé en ce que** le cubilot est également alimenté en coke.

15. Procédé suivant l'une quelconque des revendications précédentes, **caractérisé en ce qu'**on charge également des mitrailles dans le four métallurgique.

16. Procédé suivant la revendication 15, **caractérisé en ce qu'**on charge dans le four métallurgique de 20 à 45%, de préférence 25 à 35%, en poids d'éléments agglomérés, par rapport au poids des mitrailles chargées dans le four.

17. Cubilot adapté pour la réalisation du procédé selon les revendications 11 à 15, comprenant une installation de récupération des poussières du circuit de gaz par filtre à manches.
